(19) **Europäisches Patentamt**

**European Patent Office**

**Office européen des brevets**

(11) Publication number: **0 216 514**
**B1**

(12) **EUROPEAN PATENT SPECIFICATION**

(45) Date of publication of the patent specification:
**14.11.90**

(51) Int. Cl.⁵: **F16D 27/14,** F16D 27/10

(21) Application number: **86306515.7**

(22) Date of filing: **22.08.86**

(54) **Electromagnetic clutches.**

(30) Priority: **23.08.85 JP 184063/85**
**27.08.85 JP 186538/85**

(43) Date of publication of application:
**01.04.87 Bulletin 87/14**

(45) Publication of the grant of the patent:
**14.11.90 Bulletin 90/46**

(84) Designated Contracting States:
**DE FR GB IT SE**

(56) References cited:
**FR-A- 934 275**
**GB-A- 691 027**
**GB-A- 792 530**
**US-A- 1 519 417**
**US-A- 2 958 406**

**PATENT ABSTRACTS OF JAPAN, vol. 4,**
**no. 9 (M-89), 23rd January 1980, page 114 M 89; &**
**JP-A-54 147 345 (NIPPON DENSO K.K.) 17-11-1979**

(73) Proprietor: **SANDEN CORPORATION, 20 Kotobuki-cho,**
**Isesaki-shi Gunma-ken(JP)**

(72) Inventor: **Koitabashi, Takatoshi, 90-5 Yanase,**
**Annaka-shii Gunma 379-01(JP)**

(74) Representative: **Jackson, Peter Arthur et al, Gill**
**Jennings & Every 53-64 Chancery Lane, GB-London**
**WC2A 1HN(GB)**

ACTORUM AG

## Description

This invention relates to electromagnetic clutches, and more particularly, relates to frictional surfaces for rotatable members of the electromagnetic clutches.

Electromagnetic clutches are well known in the prior art and are often used for controlling the transfer of power from an automobile engine to the refrigerant compressor of an automobile air conditioning system.

With reference to Figure I, an electromagnetic clutch of the type in the prior art will be described, Figure I being a cross-sectional view showing an electromagnetic clutch I mounted on a refrigerant compressor housing 3.

The electromagnetic clutch I has a ring-shaped rotor 2 rotatably supported on tubular projecting portion 3a of the compressor housing 3 through radial bearing 4. An electromagnet 5 is stationarily disposed in hollow portion 6 which is formed in rotor 2 and fixed on the compressor housing 3 by means of bolts. Electromagnet 5 comprises annular U-shaped housing 5a and electromagnetic coil 5b contained in housing 5a.

Drive shaft 7 is rotatably supported in compressor housing 3 through a radial bearing (not shown) which is mounted in tubular projecting portion 3a. Hub 8 is secured on the outer end of drive shaft 7 which extends from tubular projecting portion 3a and connected to ring-shaped armature plate I0 through a plurality of leaf springs 9. Armature plate I0 is thus supported by leaf springs 9 around hub 8 with a radial gap and faces annular pole faces 2a of rotor 2 with an axial gap. Armature plate I0 may be disposed between rotor 2 and a flange portion on hub 8. Also armature plate I0 is provided with concentric annular magnetic pole faces I0a.

In this construction of electromagnetic clutch, when coil 5b of electromagnet 5 is energised, magnetic flux is generated and passed through annular housing 5a, rotor 2, armature plate I0, rotor 2 and housing 5a. Armature plate I0 is thus attracted to pole faces 2a of rotor 2. Accordingly, the rotational force of rotor 2 is transmitted to drive shaft 7 through armature plate I0. On the other hand, when coil 5b of electromagnet 5 is de-energised, the magnetic flux disappears, and armature plate I0 is disconnected from pole faces 2a of rotor 2 by recoil strength of leaf springs 9. Therefore, the rotational force of rotor 2 is not transmitted to drive shaft 7.

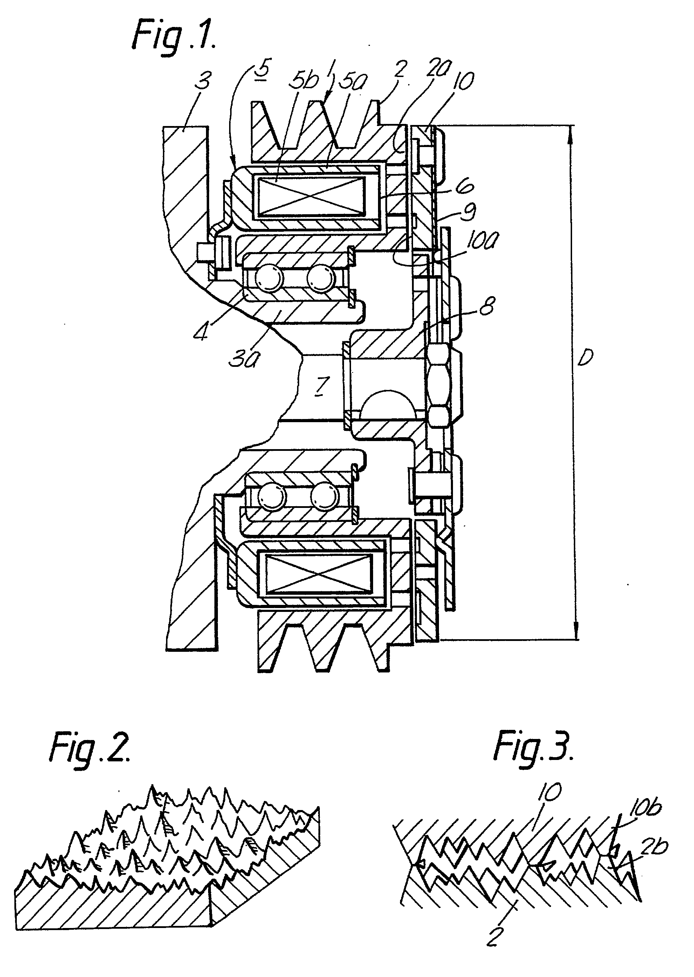

In the above-mentioned electromagnetic clutch, a frictional surface defined by pole faces 2a of rotor 2 and a frictional surface defined by pole faces I0a of armature plate I0 are formed by turning, and then plated and thereafter treated by grinding. These frictional surfaces are thus provided with irregular depressions and projections as shown in Figure 2. The initial contact area between the opposed rotor 2 and armature plate I0, when their frictional surfaces are produced by grinding, is only below twenty percent of their potential area of contact.

Referring to Figure 3, when the frictional surfaces of rotor 2 and armature plate I0 are initially engaged with one another, wedge-shaped projection 2b of rotor 2 and wedge-shaped projection I0b of armature plate I0 scratch each other. Therefore, a large frictional force is produced therebetween. However, shears are generated on the top of the projections by engagement of rotor 2 and armature plate I0. Accordingly, after projections 2b and I0b have been engaged two or three times, the tops of the projections 2b and I0b are shaved away, and the torque transfer is decreased.

Thereafter, the area of contact between rotor 2 and armature plate I0 is gradually increased by abrasion caused by continuous engagement, and thus the torque transfer of electromagnetic clutch I is increased. Finally, the torque transfer of electromagnetic clutch I becomes three or four times its required (initial) value. However, when the number of engagement time is less than a certain number, e.g. fifty times, the torque transfer of electromagnetic clutch I is not increased.

Also, in general, the materials of the frictional surfaces have the same hardness. Therefore, if there is only partial contact between the frictional surfaces in the initial stage of engagement in an electromagnetic clutch, a weld deposit with high hardness is formed between the frictional surfaces. The frictional surfaces become rough.

Possible solutions to obtain large torque transfer in the initial stage of engagement, such as below fifty times, are to enlarge the area of the frictional surfaces by increasing dimension D in Figure I, or to increase the magnetic force by enlarging the sectional area of coil 5b, but these solutions increase the size and weight of the electromagnetic clutch.

A construction for improvement of torque transfer without change of dimension of an electromagnetic clutch is shown in Japanese patent application publication no: 54-I47,345. The rotor or armature plate has a thin layer made of soft metal, which is softer and has a higher frictional factor than magnetic material forming both frictional surfaces.

FR-A 934275 dislcoses an electromagnetic clutch, comprising a first rotatable member rotatably supported on a first bearing and having a first axial end magnetic frictional surface; a second rotatable member rotatably supported on a second bearing; an annular magnetic armature member supported on the second rotatable member so as to be capable of limited axial movement, and having a second axial end magnetic frictional surface which faces the first axial end magnetic frictional surface with an axial gap therebetween; and electromagnetic means for attracting the facing frictional surfaces into contact with one another; at least one of the facing frictional surfaces being provided with spirally curved depressions and projections with a predetermined pitch and further provided with a layer of metal with lower hardness than the magnetic materials of the rotatable member and the armature member, and, according to the invention, such a clutch is characterised in that both of the facing frictional surfaces are provided with the spirally curved depressions and projections, but only one of the facing frictional surfaces if further provided with the layer, which is of metal plating.

Such an electromagnetic clutch can have a high level of torque transfer, can be compact and light in weight, and can at the same time be low in cost and high in effectiveness.

The layer of metal plating can be galvanising, or can be tin and zinc plating.

In the accompanying drawings:

Figure 1 is a vertical cross sectional view of an electromagnetic clutch known in the prior art;

Figure 2 is an explanatory rough sketch illustrating a frictional surface of an armature plate or a rotor of the electromagnetic clutch of Figure 1;

Figure 3 is an explanatory cross sectional view illustrating frictional surfaces of an armature plate and a rotor when those are fitted in initial stage in the electromagnetic clutch of Figure 1;

Figure 4 is a vertical cross sectional view of an electromagnetic clutch in accordance with the present invention;

Figure 5 is an explanatory front view illustrating a frictional surface of an armature plate or a rotor of a clutch in accordance with the invention;

Figure 6 is an explanatory enlarged cross sectional view illustrating the frictional surfaces of an armature plate and a rotor of a clutch in accordance with the present invention;

Figure 7 is an explanatory enlarged cross sectional view illustrating the initial stage of fitting between the frictional surfaces of the armature plate and the rotor of Figure 6;

Figure 8 is an explantory enlarged cross sectional view illustrating the result of contact between the frictional surfaces of the armature plate and the rotor of Figure 6;

Figure 9 is a graph which illustrates change of torque transfer corresponding to the engagement times of the rotor and the armature plate in electromagnetic clutches of the prior art and in accordance with the present invention;

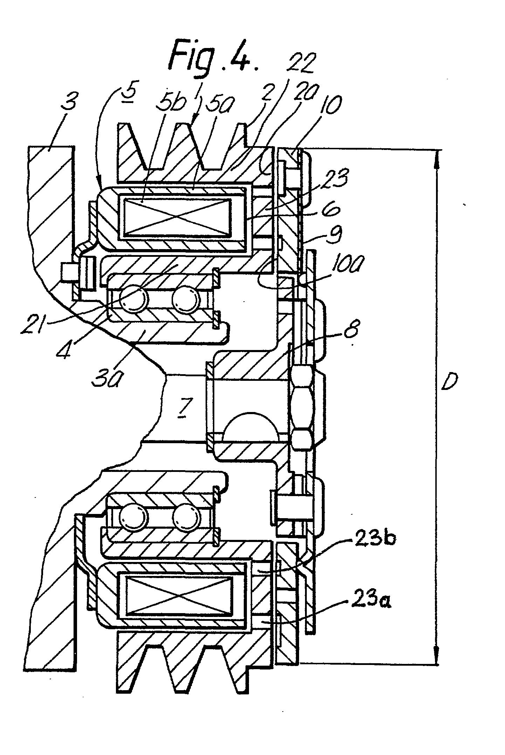

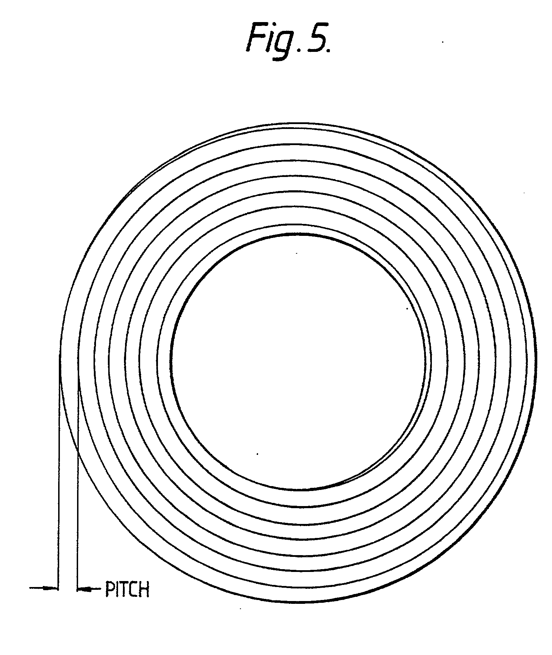

With reference to Figures 4 and 5, there is shown an electromagnetic clutch of the present invention which is similar to the electromagnetic clutch shown in the Figure 1, except for the construction of the rotor and armature plate. Therefore, similar parts are represented by the same reference numbers as shown in Figure 1 and a detailed description of these parts is omitted.

The rotor 2 is formed of an integrated body of magnetic material, such as steel, and comprises inner cylindrical portion 21, outer cylindrical portion 22 and end plate portion 23 which is connected at an axial end of the rotor 2 between both cylindrical portions 21 and 22. End plate portion 23 is provided with a plurality of concentric slits 23a,23b. These slits form between them concentric annular magnetic pole faces 2a which define a frictional surface.

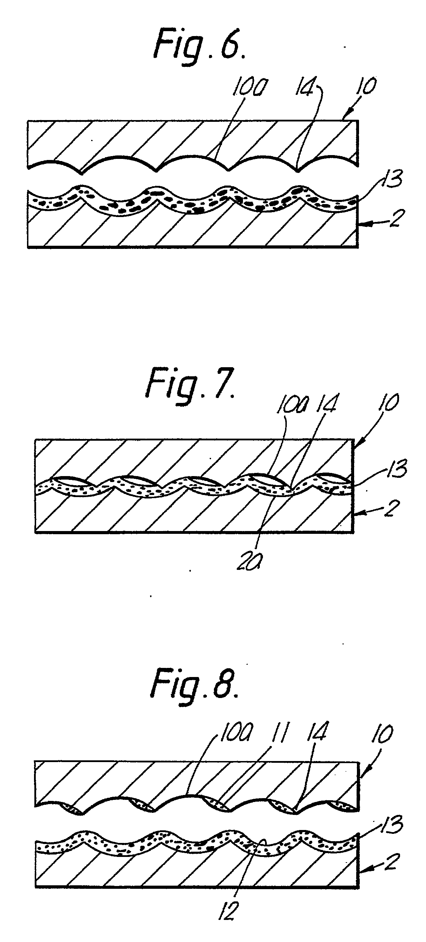

The frictional surface of pole faces 2a of rotor 2 is finished by machining and is then plated. The front end view of the frictional surface of a pole face 2a after machining is shown in Figure 5, i.e. small spirally curved depressions and projections are formed on the frictional surface of pole faces 2a of rotor 2 which face armature plate 10. Rotor 2 is then disposed in a plating tank to form a layer of plating. Thus, layer 13 of plating is formed on frictional surface of pole faces 2a, as shown in Figure 6. Layer 13 of plating may be treated on the surface by electric zinc galvanising, and has forty five degree as Brinell hardness. Armature plate 10 is also formed of magnetic material, such as steel plates, and has sixty two degree as Brinell hardness. Similar spirally curved depressions and projections are formed on the frictional surface of the pole faces 10a of armature plate 10.

The spirally curved depressions and projections formed on rotor 2 and armature plate 10 have a certain interval, or predetermined pitch, e.g. from 0.3 mm to 0.5 mm, and extend in the same spiral direction as each other. The depressions and projections are easily formed by machining. When magnetic coil 5b is energised, armature plate 10 which is connected with drive shaft 7 is attracted to axial end plate 23 and is engaged with the frictional surface of pole faces 2a of rotor 2 by magnetic flux which is generated by coil 5b of electromagnet 5. Thus, driving force is transmitted to drive shaft 7 from rotor 2 through armature plate 10.

In this operation, when armature plate 10 and rotor 2 initially engage, as shown in Figure 7, projections 14 formed on frictional surface of pole faces 10a of armature plate 10 gnaw into layer 13 of plating due to attractive force, whereas the projections of layer 13 of plating are deformed and the contact between both frictional surfaces is thus securely close.

Furthermore, when rotor 2 and armature plate 10 engage each other, layer 13 of plating is partly sloughed off, as shown in Figure 8, and portions 11 adhere on the frictional surface of armature plate 10. Adherent portions 11 on the armature plate 10 grow due to repeated engagement of armature plate 10 and rotor 2. Adhesion means that small projections of the frictional surface of armature plate 10 turn layer 13 of plating on the frictional surface of rotor 2 thin, the sloughed off metal being locally gathered, pressed, combined and thus coagulated. At the same time, shaved off portions 12 are formed on layer 13 of plating of the frictional surface of rotor 2.

Adherent portion 11 and shaved off portion 12 are formed on the same circumference at several locations which face each other, and also are formed arc-shaped. Adherent portion 11 and shaved off portion 12 are formed on initial engagement. Adherent portion 11 and shaved off portion 12 produce sufficient frictional force to prevent the decreasing of transmission torque even though attractive force to armature plate 10 is lessened by decreasing the magnetic force. Therefore, after armature plate 10 has been attracted to rotor 2, the volume of electric current supplied to coil 5b of electromagnet 5 may be decreased. The reason for increase of transmission torque is that adherent portion 11 and shaved off portion 12 are made by forcedly tearing the same body off, the engagement between adherent portion 11 and shaved off portion 12 maintaining close contact. When adherent portion 11 and shaved off por-

tion l2 are engaged with one another, resistance force against this tearing is added to the frictional force between adherent portion ll and shaved off portion l2, and thus the transmission torque is made large.

The transmission torque of electromagnetic clutch is not affected by the co-efficient of friction of the plating metal. Therefore, a plating metal which has lower hardness and is more inexpensive than magnetic materials should be utilised, e.g. zinc, or tin and zinc alloy.

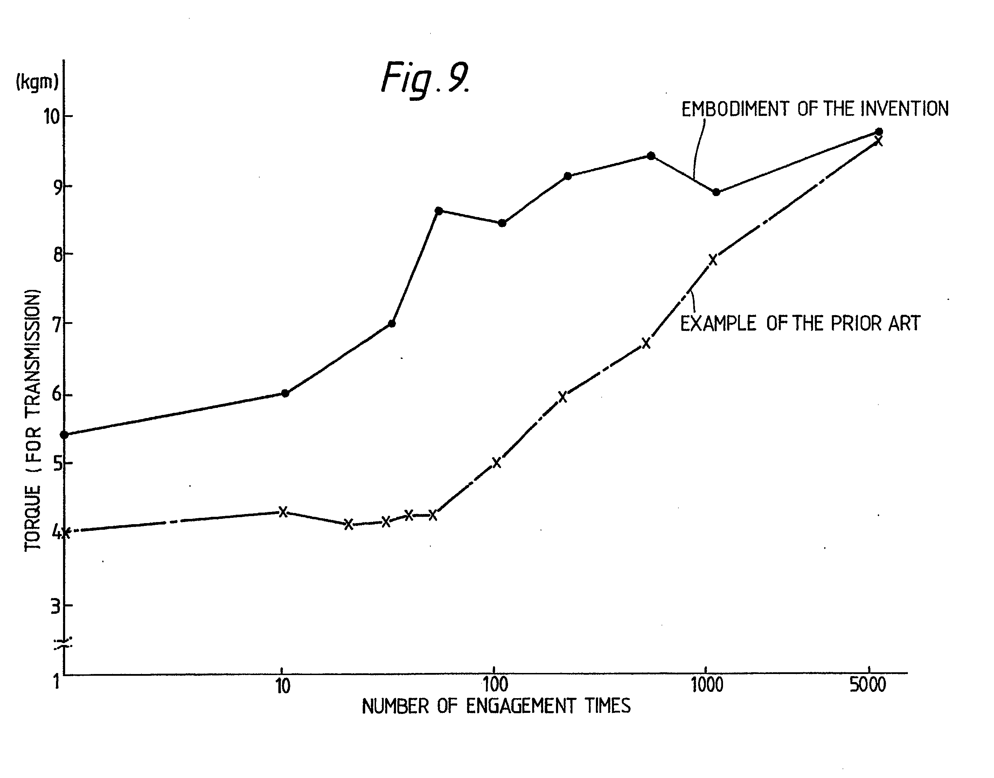

Referring to Figure 9, change of transmission torque within five thousand times of engagement is shown. In the embodiment of this invention, layer l3 of plating on rotor 2 is shaved off by projections l4 of the frictional surface of armature plate l0, and eventually disappears. Therefore, transmission torque of this invention is equal to that of a conventional embodiment. Also, in a conventional embodiment, a deposit is produced on the frictional surfaces of rotor 2 and armature plate l0 within fifty times of engagement, and hard facing and failure by heating may be produced. On the other hand, in the electromagnetic clutch of this invention, adherent portions of the plating metal are dispersedly produced between the frictional surfaces of rotor 2 and armature plate l0. Transmission torque is thus surely increased by the adherent portions.

The direction of the spirally curved depressions and projections of rotor 2 may be the same as the direction of rotation of rotor 2 or be opposite to the direction of rotation of rotor 2. Also, the direction of the spirally curved depressions and projections of rotor 2 and armature plate l0 may be opposite each other.

## Claims

1. An electromagnetic clutch (1) comprising a first rotatable member (2) rotatably supported on a first bearing (4) and having a first axial end magnetic frictional surface (2a); a second rotatable member (7) rotatably supported on a second bearing; an annular magnetic armature member (10) supported on the second rotatable member (7) so as to be capable of limited axial movement, and having a second axial end magnetic frictional surface (10a) which faces the first axial end magnetic frictional surface (2a) with an axial gap therebetween; and electromagnetic means (5) for attracting the facing frictional surfaces (2a, 10a) into contact with one another; at least one of the facing frictional surfaces (2a, 10a) being provided with spirally curved depressions and projections with a predetermined pitch and further provided with a layer of metal (13) with lower hardness than the magnetic materials of the first rotatable member (2) and of the armature member (10); chacterised in that both of the facing frictional surfaces (2a, 10a) are provided with the spirally curved depressions and projections (14), but only one of the facing frictional surfaces (2a) is further provided with the layer, which is of metal plating (13).

2. An electromagnetic clutch according to claim 1, characterised in that the layer of metal plating (13) is galvanising.

3. An electromagnetic clutch according to claim 1, characterised in that the layer of metal plating (13) is tin and zinc alloy plating.

## Patentansprüche

1. Elektromagnetische Kupplung (1) mit einem ersten drehbaren Teil (2), das drehbar auf einem ersten Lager (4) getragen ist und eine erste axiale Magnetreibungsendoberfläche (2a) aufweist; einem zweiten drehbaren Teil (7), das drehbar auf einem zweiten Lager getragen ist; einem ringförmigen magnetischen Ankerteil (10), das auf dem zweiten drehbaren Teil (7) so getragen ist, daß es eine begrenzte axiale Bewegung ausführen kann und das eine zweite axiale Magnetreibungsendoberfläche (10a) aufweist, die der ersten axialen Magnetreibungsendoberfläche (2a) mit einer axialen Lücke dazwischen gegenübersteht; und einer elektromagnetischen Einrichtung (5) zum Anziehen der sich gegenüberstehenden Reibungsoberflächen (2a, 10a) in Kontakt miteinander; wobei mindestens eine der sich gegenüberstehenden Reibungsoberflächen (2a, 10a) mit spiralig kurvenförmigen Erniedrigungen und Vorsprüngen von einem vorbestimmten Abstand versehen ist und weiterhin mit einer Metallschicht (13) versehen ist, die eine geringere Härte als die magnetischen Materialien des ersten drehbaren Teils (2) und des Ankerteils (10) aufweist; dadurch gekennzeichnet, daß beide sich gegenüberstehenden Reibungsoberflächen (2a, 10a) mit den spiralig kurvenförmigen Erniedrigungen und Vorsprüngen (14) versehen sind, jedoch nur eine der sich gegenüberstehenden Reibungsoberflächen (2a) weiter mit der Schicht versehen ist, die eine Metallauflage (13) ist.

2. Elektromagnetische Kupplung nach Anspruch 1, dadurch gekennzeichnet, daß die Schicht der Metallauflage (13) galvanisiert ist.

3. Elektromagnetische Kupplung nach Anspruch 1, dadurch gekennzeichnet, daß die Schicht der Metallauflage (13) eine Zinn- und Zinklegierungsauflage ist.

## Revendications

1. Embrayage électromagnétique (1) comprenant un premier élément rotatif (2) monté en rotation sur un premier palier (4) et comportant une première surface de friction magnétique d'extrémité axiale (2a) ; un second élément rotatif (7) monté en rotation sur un second palier ; un élément d'armature magnétique annulaire (10) monté sur le second élément rotatif (7) de manière à pouvoir effectuer un mouvement axial limité, et comportant une seconde surface de friction magnétique d'extrémité axiale (10a) venant en face de la première surface de friction magnétique d'extrémité axiale (2a) avec un intervalle axial entre les deux ; et des moyens électromagnétiques (5) destinés à attirer les surfaces de friction opposées (2a, 10a) pour les amener en contact l'une avec l'autre ; l'une au moins des surfaces de friction opposées (2a, 10a) étant munie de dépressions et de saillies courbées en spirale avec un pas prédéterminé, et comportant en outre une couche de métal (13) de dureté plus faible que celle des matériaux magnétiques du premier élément rotatif (2) et de l'élément d'armature 10) ; embrayage caractérisé en ce que les deux surfaces de friction opposées (2a, 10a) sont munies des dépressions et des projections courbées en spirale (14), mais en ce que l'une seulement des surfaces de friction opposées (2a) est en outre munie de la couche de métal constituée par un placage métallique (13).

2. Embrayage électromagnétique selon la revendication 1, caractérisé en ce que la couche de dépôt métallique (13) est obtenue par galvanisation.

3. Embrayage électromagnétique selon la revendication 1, caractérisé en ce que la couche de dépôt métallique (13) est constituée par un dépôt en alliage d'étain et de zinc

EP 0 216 514 B1

**Fig .1.**

**Fig .2.**

**Fig .3.**

Fig.4.

# Fig.5.

PITCH

# Fig. 6.

# Fig. 7.

# Fig. 8.

Fig.9.

(kgm)

EMBODIMENT OF THE INVENTION

EXAMPLE OF THE PRIOR ART

TORQUE (FOR TRANSMISSION)

NUMBER OF ENGAGEMENT TIMES

EP 0 216 514 B1